# EUROPEAN PATENT SPECIFICATION

(11) **EP 2 286 658 B1**
(45) Date of publication and mention of the grant of the patent: **29.08.2012**
(21) Application number: 10007810.4
(22) Date of filing: 27.07.2010
(51) Int. Cl.: A01F 25/14, B32B 27/32, C08L 23/08

(54) **Silage film**
Silagefolie
Film pour l'ensilage

(30) Priority: 28.07.2009 JP 2009175121
(43) Date of publication of application: 23.02.2011
(73) Proprietor: The Nippon Synthetic Chemical Industry Co., Ltd., Osaka 530-0018 (JP)
(72) Inventor: Matsumura, Yoshitaka, Osaka-shi, Osaka 531-0076 (JP)
(74) Representative: Kuhnen & Wacker

(56) References cited:
- WO-A1-99/29154
- WO-A1-2009/041440

## Description

The present invention relates to a silage film, particularly, it relate to a silage film comprising a resin composition containing, as a main component, a saponified ethylene-vinyl acetate based copolymer having an ethylene content of from 20 to 60% by mol.

Conventionally, silage used as a feed of domestic animals is produced by mowing grass and the like, storing them in a silo and fermenting them under an anaerobic condition.

Such a fermentation is caused by an action of lactic acid bacteria and the like adhered to the grass and the like, which enables the inhibition of the activity of aerobic bacteria and generation of mold which cause decomposition of the grass, by the increase of compositional ratio of organic acids such as acetic acid and lactic acid in the silage to lower pH, and enables long-term storage of the feed. In addition, since such organic acids can be important nutrient source of domestic animals, they produce a good effect for the health improvement of domestic animals.

In order to prepare such silage, it was conventionally general to use a tower silo. However, since the tower silo is large in scale and requires large labor for packing grass, both of work load and economical burden were large. In addition, there was also a danger of causing collapse of the tower due to its insufficient strength.

Accordingly, a simplified silo which uses a thermoplastic resin film has been spreading in recent years. Illustratively for example, there may be mentioned a bunker silo in which a slope face of hill is cut and covered with concrete, materials such as grass are spread thereon and the upper part is covered with a thermoplastic resin film; an underground type (or semi-underground type) silo in which a pit is dug in the ground, walls are made using concrete or wood, it is filled with grass and the like and the upper part is covered with a thermoplastic resin film; a bag silo in which materials are packed in a large bag made of a thermoplastic resin film and the bag is sealed; a tube silo which uses a thermoplastic resin tube and renders possible high density packing using a dedicated machine; a stack silo in which materials are piled up on the ground and covered with a sheet; a wrap silo in which mowed grass are collected and reshaped into a cylindrical shape (roll bale) or rectangular shape (square bale) using a large machine, and such a reshaped product is wrapped with a broad film made of a thermoplastic resin, and the like.

Of these, particularly the wrap silo is widely used. In the wrap silo, since the reshaped grass is sealed and wrapped by rolling up with a film, amount of oxygen inside the film is lowered to change to an anaerobic condition so that the silage is prepared.

In this connection, such a wrap silo has been studied in detail by Professor G. Borreani at Faculty of Agriculture, University of Torino, Italy.

Conventionally, a polyethylene resin which is inexpensive and excellent in mechanical strength has been used as a thermoplastic resin film to be used in such a simplified silo (to be referred to as silage film thereinafter). However, in the case of using a silage film made of a polyethylene resin, it causes a problem that mold are generated in silage close to the film and inner surface of the film is covered with the mold when the silage is preserved for a prolonged period of time.

Accordingly, by thinking that the cause of the generation of mold is the presence of oxygen entered by permeating through the film, a method in which a polyamide based resin having superior gas-barrier properties is used instead of the polyethylene resin was devised (e.g., US Patent No. 6610377).

Further prior art documents relate to resin compositions comprising ethylene-vinyl acetate based copolymers as e.g. the WO 2009/041440 A1.

However, when a polyamide based resin was used in the above-mentioned silage film, long-term preservation effect of silage (inhibition effect on mold generation) was still insufficient.

Further, though it is possible to improve gas-barrier properties by thickening thickness of such a polyamide based resin layer, in the case of employing a technique of closely contacting the film to silage with optionally stretching it in order to reduce residual oxygen in the silage, there is a tendency that draw stretchability becomes insufficient when thickness of the film is thick.

In addition, in the case of employing the technique of closely contacting to silage with stretching, it causes a problem that air flows into silage due to a hole caused by sticking of grass into the silage film or the film is apt to break caused by the tension applied to the film at the time of wrapping, thus leaving room for further improvement.

The above problems are solved by a silage film according to claim 1. Preferred embodiments are described in dependent claims 2 to 11.

By taking the above-mentioned circumstances into consideration, the present inventors have conducted intensive studies and found as a result that it becomes possible to provide penetration resistance and draw stretchability without spoiling gas-barrier properties, by using a saponified ethylene-vinyl, acetate based copolymer (A) (to be referred sometimes to as EVOH resin (A) hereinafter) having markedly excellent gas-barrier properties and an ethylene content of from 20 to 60% by mol, as a resin constituting a silage film, and blending the resin with a saponified ethylene-vinyl acetate based copolymer (B) (to be referred sometimes to as saponified EVA (B) hereinafter) having an ethylene content of 70 to 98% by mol.

Such a saponified EVA (B) is obtained by saponifying the vinyl acetate component of the ethylene-vinyl acetate based copolymer having a high ethylene content of 70% by mol or more, and is different from the EVOH resin which has a ethylene content of generally from 20 to 60% by mol and is certified as a resin having gas-barrier properties.

The saponified EVA (B) is a water-insoluble resin similar to the EVOH resin (A), but does not have the high degree of gas-barrier properties unlike the EVOH resin (A) because of its high ethylene content. Accordingly, the saponified EVA (B) is recognized by those skilled in the art as a resin completely different from the EVOH resin (A).

In addition, the saponified EVA (B) is a resin clearly different also from the ethylene-vinyl acetate copolymer (a resin generally called EVA resin which has flexibility) in view of the presence or absence of hydroxyl group. Since the saponified EVA (B) has hydroxyl groups, it has a higher polarity than the EVA resin, but on the other hand, it has a propety of being poor in flexibility, so that it is recognized by those skilled in the art that the EVA resin and the saponified EVA (B) are completely different.

Since the EVOH resin (A) has many hydroxyl groups and has high polarity, the EVOH resin (A) is a resin having a property of being markedly excellent in gas-barrier properties. Though there may be considered a technique of improving flexibility by blending the EVA resin with this resin, when the EVOH resin having high polarity is blended with the EVA resin which is a resin having lower polarity in comparison with this, the EVA resin cannot be properly dispersed in the EVOH resin so that there is a possibility that appearance of the film worsens and the effect to improve penetration resistance and draw stretchability cannot be obtained.

On the other hand, since the saponified EVA (B) does not have high degree of gas-barrier properties because of its high ethylene content, though it has hydroxyl groups, and is not a resin which is excellent in flexibility like the case of the EVA resin, it was unthinkable that its penetration resistance and draw breaking stretchability are improved by simply blending it with the EVOH resin (A).

However, according to the invention, the present inventors have conducted intensive studies and found unexpectedly as a result that the characteristic effect of the invention, namely penetration resistance and draw stretchability become markedly excellent without spoiling gas-barrier properties of the EVOH resin, can be obtained when the EVOH resin (A) is blended with the saponified EVA (B).

The invention encompasses the following embodiments.
(1) A silage film, which comprises at least one layer of a resin composition layer comprising a saponified ethylene-vinyl acetate based copolymer (A) having an ethylene content of from 20 to 60% by mol and a saponified ethylene-vinyl acetate based copolymer (B) having an ethylene content of 70 to 98% by mol, wherein a blending ratio (A)/(B) of the saponified ethylene-vinyl acetate based copolymer (A) to the saponified ethylene-vinyl acetate based copolymer (B) is from 91/9 to 78/22 by weight ratio.
(2) The silage film according to (1), which comprises a hydrophobic thermoplastic resin layer on at least one side of the resin composition layer.
(3) The silage film according to (2), wherein the hydrophobic thermoplastic resin is a polyolefin based resin.
(4) The silage film according to any one of (1) to (3), wherein the resin composition layer is an intermediate layer.
(5) The silage film according to any one of (1) to (4), wherein a layer constitution thereof is from 3 to 20 layers.
(6) The silage film according to any one of (1) to (5), wherein a total thickness thereof is from 5 to 500 µm.
(7) The silage film according to any one of (2) to (6), wherein a thickness ratio of the thickest hydrophobic thermoplastic resin layer to the thickest resin composition layer is more than 1 and 30 or less.
(8) The silage film according to any one of (1) to (7), wherein a layer constitution thereof is hydrophobic thermoplastic resin layer/hydrophobic thermoplastic resin layer/adhesive resin layer/resin composition layer/adhesive resin layer/hydrophobic thermoplastic resin layer/hydrophobic thermoplastic resin layer.
(9) The silage film according to (2), which comprises: the resin composition layer; an adhesive resin layer; and a hydrophobic thermoplastic resin layer, wherein
   a layer constitution of the film is hydrophobic thermoplastic resin layer/hydrophobic thermoplastic resin layer/adhesive resin layer/resin composition layer/adhesive resin layer/hydrophobic thermoplastic resin layer/hydrophobic thermoplastic resin layer,
   a thickness of the resin composition layer is from 0.5 to 50 µm,
   a thickness of the adhesive resin layer is from 1 to 30 µm,
   a thickness of the hydrophobic thermoplastic resin layer is from 1 to 100 µm,
   a thickness ratio of the thickest hydrophobic thermoplastic resin layer to the thickest resin composition layer is more than 1 and 30 or less, and
   a thickness ratio of the thickest adhesive resin layer to the thickest resin composition layer is from 0.1 to 2.
(10) The silage film according to (9), wherein the hydrophobic thermoplastic resin is a polyolefin based resin.
(11) The silage film according to (1) or (2), wherein a blending ratio of the saponified ethylene-vinyl acetate based copolymer (B) based on the saponified ethylene-vinyl acetate based copolymer (A) is from 1 to 30 % by weight.

Penetration resistance and draw stretchability of the silage film of the invention become markedly excellent without spoiling its gas-barrier properties by the possession of a resin composition layer comprising from 1 to 30% by weight of a saponified ethylene-vinyl acetate based copolymer (B) having an ethylene content of 70% by mol or more based on a saponified ethylene-vinyl acetate based copolymer (A) having an ethylene content of from 20 to 60% by mol.

As a result, since the silage film of the invention shows excellent penetration resistance and draw stretchability while keeping its excellent gas-barrier properties, it becomes possible to obtain good silage in which mold are hardly generated inside the silage even when stored for a prolonged period of time, air does not flow into it due to a hole caused by the grass and the like, and the film is not broken by the tension applied to the film at the time of wrapping.
Fig. 1 is a graph showing a relationship between the areas of generated mold adhered to the film surface and the days in Examples and Comparative Examples.
Fig. 2 is a photograph showing conditions of a roll bale wrap silage after 420 days in Example 1.
Fig. 3 is a photograph showing conditions of a roll bale wrap silage after 420 days in Comparative Example 2.

### [Mode for Carrying Out the Invention]

Although the requirements of the invention are minutely described in the following, these are an example of preferred embodiments.

### <Resin composition>

The resin composition to be used in the silage film of the invention is a resin composition which comprises 30% by weight or less of a saponified ethylene-vinyl acetate based copolymer (B) having an ethylene content of 70% by mol or more based on a saponified ethylene-vinyl acetate based copolymer (A) having an ethylene content of from 20 to 60% by mol.

The following describes respective components in order.

### [EVOH resin (A)]

The EVOH resin (A) which is a main component of the resin composition is a water-insoluble resin and can be obtained by saponifying a copolymer of ethylene and vinyl acetate. The ethylene-vinyl acetate copolymer is produced by a conventionally known optional polymerization method, for example, solution polymerization, suspension polymerization, emulsion polymerization and the like, and saponification of the ethylene-vinyl acetate copolymer can also be carried out by a conventionally known method.

Regarding the ethylene content of the EVOH resin (A) to be used in the resin composition of the invention, a content of the ethylene structural unit measured based on ISO 14663 is from 20 to 60% by mol. Also, it is preferably from 25 to 55% by mol, further preferably from 35 to 50% by mol, particularly preferably from 38 to 48% by mol. When the content of the ethylene structural unit is too small, there is a tendency of lowering flexibility of the film. On the other hand, when the content of the ethylene structural unit is too large, there is a tendency that gas-barrier properties become insufficient.

Also, a degree of saponification of the vinyl acetate component is measured based on JIS K6726 (however, the EVOH resin is measured as a solution uniformly dissolved in a water/methanol solvent) and is generally 95% by mol or more, more preferably from 95 to 100% by mol, further preferably from 98 to 100% by mol. This is because there is a tendency of lowering the gas-barrier properties when the degree of saponification is low.

In addition, a melt flow rate (MFR) of the EVOH resin (A) is generally from 0.1 to 100 g/10 minutes, preferably from 0.5 to 50 g/10 minutes, particularly preferably from 1 to 20 g/10 minutes, under conditions of 210°C and a load of 2160 g. When the value of MFR is too small, there is a tendency that torque becomes too high at the time of extrusion-forming and vertical streaks are generated on the obtained film, and on the other hand, when the value of MFR is too large, there is a tendency that the extrusion-formability becomes unstable and film thickness of the obtained film varies.

As the EVOH resin (A) to be used in the resin composition of the invention, two or more kinds of EVOH resins in which an ethylene content, a degree of saponification or a MFR is different may be used as a mixture, with the proviso that they satisfy the above-mentioned requirements.

Also, as the EVOH resin to be used in the invention, there will be no trouble when the copolymer is further copolymerized with a small amount of α-olefin such as propylene, isobutene, α-octene, α-dodecene and α-octadecene, hydroxy group-containing α-olefins such as 3-buten-1-ol, 4-penten-1-ol and 3-buten-1,2-dion and hydroxy group-containing α-olefin derivatives such as esterified products thereof and acylated products, an unsaturated carboxylic acid or a salt, partial alkyl ester, complete alkyl ester, nitrile, amide or anhydride thereof, an unsaturated sulfonic acid or a salt thereof, a vinyl silane compound, vinyl chloride, styrene and the like. In addition, there will be no trouble when it is "post-modification", such as urethanation, acetalization, cyanoethylation, oxyalkylenation and epoxidation.

Particularly, an EVOH resin copolymerized with a hydroxy group-containing α-olefin is desirable from the viewpoint that formability and stretchability become superior, of which an EVOH resin having 1,2-diol at its side chain is desirable.

The EVOH resin (A) to be used in the invention may contain a additive agent which is generally blended in an EVOH resin in advance, such as a heat stabilizer, an antioxidant, an antistatic agent, a coloring agent, an ultraviolet ray absorbent, a lubricant, a plasticizer, a light stabilizer, a surfactant, an antibacterial agent, a desiccant, an anti-blocking agent, a flame retarder, a crosslinking agent, a curing agent, a foaming agent, a nucleating agent, a defogging agent, an additive for biodegradation, a silane coupling agent, an oxygen absorbent and the like, within such a range that they do not inhibit the effect of the invention.

As the above-mentioned heat stabilizer, with an aim of improving various physical properties such as heat stability at the time of melt forming, additive agents including organic acids such as acetic acid, propionic acid, butyric acid, lauric acid, stearic acid, oleic acid and behenic acid or their salts such as alkali metal salts (sodium, potassium and the like), alkaline earth metal salts (calcium, magnesium and the like) and zinc group metal salts (zinc and the like); and inorganic acids such as sulfuric acid, sulfurous acid, carbonic acid, phosphoric acid and boric acid, or their salts such as alkali metal salts (sodium, potassium and the like), alkaline earth metal salts (calcium, magnesium and the like) and zinc group metal salts (zinc and the like). Of these, it is particularly desirable to add acetic acid, phosphoric acid, boron compounds including boric acid and its salts, acetates and phosphates.

When acetic acid is added, the added amount is generally from 0.001 to 1 part by weight, preferably from 0.005 to 0.2 part by weight, particularly preferably from 0.01 to 0.1 part by weight, based on 100 parts by weight of the EVOH resin (A). When the added amount of the acetic acid is too small, there is a tendency that the containing effect of acetic acid is not sufficiently obtained, and when it is too large on the contrary, there is a tendency that a film having uniform thickness and appearance becomes difficult to obtain.

When phosphoric acid is added, the added amount is generally from 0.0005 to 0.1 part by weight, preferably from 0.001 to 0.05 part by weight, particularly preferably from 0.002 to 0.03 part by weight, based on 100 parts by weight of the EVOH resin (A) (it is heat-degraded with sulfuric acid and nitric acid, the phosphate radical is analyzed by atomic absorption spectrometry). When the added amount of the phosphoric acid is too small, there is a tendency that the containing effect of phosphoric acid is not sufficiently obtained, and when it is too large on the contrary, there is a tendency that a film having uniform thickness and appearance becomes difficult to obtain.

Also, when boron compound is added, the added amount is, on the boron basis(analysis by ICP emission spectrometry after ashing), generally from 0.001 to 1 part by weight, preferably from 0.002 to 0.2 part by weight, particularly preferably from 0.005 to 0.1 part by weight, based on 100 parts by weight of the EVOH resin (A). When the added amount of the boron compound is too small, there is a tendency that the containing effect of boron compound is not sufficiently obtained, and when it is too large on the contrary, there is a tendency that a film having uniform thickness and appearance becomes difficult to obtain.

In addition, as the added amount of acetate or phosphate (including hydrogenphosphate), it is, in terms of metal (analysis by ICP emission spectrometry after ashing), generally from 0.0005 to 0.1 part by weight, preferably from 0.001 to 0.05 part by weight, particularly preferably from 0.002 to 0.03 part by weight, based on 100 parts by weight of the EVOH resin (A). When the added amount is too small, there is a case that the containing effect is not sufficiently obtained, and when it is too large on the contrary, there is a tendency that the obtained film is colored or an odor is generated. In this connection, when two or more kinds of salts are added to the EVOH resin (A), it is desirable that their total amount falls within the above-mentioned range of the added amount.

The method for adding acetic acid, phosphoric acid, a boron compound, an acetate or a phosphate is not particularly limited, but there may be mentioned i) a method in which a porous precipitate of the EVOH resin (A) having a water content ratio of from 20 to 80% by weight is allowed to contact with an aqueous solution of the additive to include the additive , followed by drying; ii) a method in which a uniform solution (water/alcohol solution or the like) of the EVOH resin (A) is allowed to contain the additive , followed by excluding in a strand shape into a coagulation liquid, and the thus obtained strand is cut out to make a cylindrical pellet or made into a spherical pellet by an underwater cutting method, followed by subjecting to a drying treatment; iii) a method in which the EVOH resin (A) and the additive are mixed all at once, followed by melt-kneading using an extruder or the like; iv) a method in which the alkali (sodium hydroxide, potassium hydroxide or the like) used in the saponification step at the time of producing the EVOH resin (A) is neutralized with organic acids such as acetic acid, and amounts of the remaining organic acids such as acetic acid and by-produced salts are adjusted by a water-washing treatment, and the like.

The methods of i) and ii) which are excellent in dispersibility of the additive are desirable for more significantly obtaining the effect of the invention, and the method of iv) is desirable when an organic acid and a salt thereof is contained.

### [Saponified EVA (B)]

Together with the above-mentioned component (A), the resin composition of the invention contains, as an essential component, a saponified ethylene-vinyl acetate based copolymer (B) having an ethylene content of 70% by mol or more.

Such a saponified EVA (B) is obtained by saponifying the vinyl acetate component of the ethylene-vinyl acetate based copolymer having an ethylene content of 70% by mol or more, and is different from the EVOH resin (A) in terms of the ethylene content.

Since the EVOH resin (A) has many hydroxyl groups and has high polarity, the EVOH resin (A) is a resin having a property of being markedly excellent in gas-barrier properties. When the EVOH resin having high polarity is blended with the EVA resin which is a resin having lower polarity in comparison with this, the EVA resin cannot be properly dispersed in the EVOH resin so that there is a possibility that appearance of the film worsens and the effect to improve penetration resistance and draw stretchability cannot be obtained.

On the other hand, since the saponified EVA (B) is not a resin excellent in flexibility though it has a hydroxyl group, it was unthinkable that its penetration resistance and draw breaking stretchability are improved by simply blending it with the EVOH resin (A).

However, according to the invention, the present inventors have conducted intensive studies and found unexpectedly as a result that the characteristic effect of the invention, namely penetration resistance and draw stretchability become markedly excellent without spoiling gas-barrier properties of the EVOH resin, can be obtained by the use of the saponified EVA (B) which is a polar resin similar to the EVOH resin.

The above-mentioned saponified EVA (B) is produced by subjecting ethylene and vinyl acetate to a conventionally known optional polymerization method such as solution polymerization, suspension polymerization and emulsion polymerization and then to saponification by a conventionally known method. Regarding the ethylene content of the saponified EVA (B), it is necessary that a content of the ethylene structural unit measured based on ISO 14663 is 70% by mol or more, and its upper limit is generally 98% by mol or less. The ethylene content is preferably from 75 to 95% by mol, more preferably from 80 to 95% by mol. When the ethylene content is too small, there is a tendency that the effect to improve penetration resistance and draw breaking stretchability becomes insufficient.

In addition, a degree of saponification of the above-mentioned saponified EVA (B) is measured based on JIS K6726, and is generally 20% by mol or more, preferably from 40 to 100% by mol, particularly preferably from 80 to 100% by mol. When the above-mentioned degree of saponification is to low, there is a tendency that affinity with the EVOH resin (A) becomes insufficient and the dispersibility is lowered, so that there is a tendency that the film appearance become worse and the effect to improve penetration resistance and draw breaking stretchability cannot be obtained sufficiently. It is desirable that a melt flow rate (MFR) (190°C, load of 2160 g) of the above-mentioned saponified EVA (B) is generally from 0.5 to 100 g/10 minutes, preferably from 1 to 50 g/10 minutes, more preferably from 2 to 30 g/10 minutes, from the viewpoint of the excellence in dispersibility and excellence in the effect of the invention.

In addition, a density of the above-mentioned saponified EVA (B) is generally from 500 to 1500 kg/m³, preferably from 800 to 1200 kg/m³, particularly preferably from 900 to 1100 kg/m³.

The above-mentioned saponified EVA (B) may be copolymerized with other copolymerizable monomers similar to the case of the above-mentioned EVOH resin (A), within such a range that the object of the invention is not spoiled.

The above-mentioned saponified EVA (B) may be a carboxyl group-containing modified form which is obtained by chemically binding to an unsaturated carboxylic acid or anhydride thereof through an addition reaction, graft reaction or the like, within such a range that the object of the invention is not spoiled. Such a modified amount is, illustratively for example, preferably 10% by mol or less. As the above-mentioned unsaturated carboxylic acid or anhydride thereof, for example, there may be mentioned an ethylenically unsaturated monocarboxylic acid such as acrylic acid, methacrylic acid, ethacrylic acid or crotonic acid, an ethylenically unsaturated dicarboxylic acid such as fumaric acid, itaconic acid, citraconic acid, maleic acid, monomethyl maleate, monoethyl maleate or maleic anhydride and anhydride or half ester thereof, and the like, of which maleic anhydride is suitably used.

The saponified EVA (B) to be used in the invention may contain a additive agent which is generally blended in a thermoplastic resin in advance, such as a heat stabilizer, an antioxidant, an antistatic agent, a coloring agent, an ultraviolet ray absorbent, a lubricant, a plasticizer, a light stabilizer, a surfactant, an antibacterial agent, a desiccant, an anti-blocking agent, a flame retarder, a crosslinking agent, a curing agent, a foaming agent, a nucleating agent, a defogging agent, an additive for biodegradation, a silane coupling agent, an oxygen absorbent and the like, within such a range that they do not inhibit the effect of the invention.

Regarding the above-mentioned saponified EVA (B), two or more kinds of saponified products of EVA in which an ethylene content, a degree of saponification, a molecular weight, an MFR, a density, a modification group and its modified amount, or the like is different within the above-mentioned ranges can be used in combination.

### [Blending ratio]

The resin composition to be used in the silage film of the invention is a resin composition in which the saponified EVA (B) is blended at a blending ratio, based on the above-mentioned EVOH resin (A), of (A)/(B) 91/9 to 78/22 (when it is expressed by a blending ratio of the saponified EVA (B) based on the EVOH resin (A), it is from 10 to 28% by weight), preferably 85/15 to 80/20 (when it is expressed by a blending ratio of the saponified EVA (B) based on the EVOH resin (A), it is from 18 to 25% by weight).

When the EVOH resin (A) is used as the main component and the saponified EVA (B) is blended therewith, it becomes possible to improve penetration resistance and draw breaking stretchability while keeping the excellent gas-barrier properties.

In this connection, the above-mentioned "when it is expressed by a blending ratio of the saponified EVA (B) based on the EVOH resin (A), it is from 1 to 30% by weight" means that the saponified EVA (B) is contained in an amount of from 1 to 30 parts by weight based on 100 parts by weight of the EVOH resin (A).

### [Other components]

In addition to the above-mentioned EVOH resin (A) and saponified EVA (B), the above-mentioned resin composition may contain a thermoplastic resin other than the EVOH resin (A) and saponified EVA (B), and an additive agent in response to the necessity within such a range that they do not spoil the effect of the invention (e.g., generally less than 20% by weight, preferably less than 10% by weight, based on the resin composition).

As the above-mentioned thermoplastic resin other than the saponified EVA (B), for example, there may be mentioned a polyolefin based resin; an ethylene-vinyl acetate copolymer resin; a vinyl ester based resin; a polyester based resin; a polyamide based resin; a polystyrene based resin; a polyvinyl chloride based resin; a carboxyl group-containing resin obtained by subjecting a polyolefin based resin, an ethylene-vinyl acetate copolymer resin or a vinyl ester based resin to an addition reaction or graft reaction of an unsaturated carboxylic acid such as maleic acid, and the like, of which a carboxyl group-containing ethylene-vinyl acetate copolymer resin is desirable.

As the above-mentioned additive agent, for example; there may be mentioned an antioxidant, a lubricant, an antistatic agent, a coloring agent, an ultraviolet ray absorbent, a plasticizer, a heat stabilizer, a light stabilizer, a surfactant, an antibacterial agent, a desiccant, an anti-blocking agent, a flame retarder, a crosslinking agent, a curing agent, a foaming agent, a nucleating agent, a defogging agent, an additive agent for biodegradation, a silane coupling agent, an oxygen absorbent and the like.

That is, a total amount of the component (A) and component (B) in the above-mentioned resin composition is generally from 80 to 100% by weight, preferably from 90 to 100% by weight.

### [Preparation of resin composition]

The above-mentioned resin composition is prepared by mixing respective components. As such a mixing method, a melt mixing method, a solution mixing method, a mechanical mixing method (e.g., pellet dry blending) and the like can be mentioned. The melt mixing method is desirable from the viewpoint of productivity and quality.

As the melt mixing method, it can be carried out by a method in which respective components are dry-blended and then mixed while melting, for example using a conventionally known melt kneading apparatus such as Kneader-Ruder, an extruder, a mixing roll, a banbury mixer and a plasto mill, but in general, use of a single screw or a twin screw extruder is desirable from the industrial point of view, and it is also desirable to arrange a vent suction device, a gear pump device, a screen device and the like as occasion demands. In addition, it is also desirable to seal inner space of a hopper with an inert gas such as nitrogen, for the purpose of inhibiting thermal oxidation and deterioration of the resin.

As the solution mixing method, for example, a method in which respective components are dissolved in a common good solvent and mixed and then precipitated in a common poor solvent, and the like can be mentioned.

The resin mixed by the melt mixing method or solution mixing method can be used, for example, in a shape such as a powdery shape, a spherical or cylindrical pellet shape or a flaky shape.

### <Silage film>

The silage film of the invention is characterized by the possession of at least one layer of the above-mentioned resin composition layer. That is, it may be used as a single layer consisting of the above-mentioned resin composition or may be used as a multilayer structure comprising at least one layer of the resin composition layer. In this connection, as described in the above, it is possible that other thermoplastic resin or additive agent is contained in the resin composition of the invention, in an amount of generally less than 20% by weight.

According to the invention, it is desirably a multilayer structure comprising at least one layer of the above-mentioned resin composition, from the viewpoint that it protects the resin composition layer as a gas-barrier layer from water and mechanical impact and a film having excellent penetration resistance and draw breaking stretchability can be obtained.

The resin to be used as a layer other than the resin composition layer, which constitutes the above-mentioned multilayer structure, is not particularly limited, but a hydrophobic thermoplastic resin can be mentioned for the purpose of preventing lowering of gas-barrier properties of the resin composition caused by water.

Illustratively for example, there may be mentioned polyethylenes (including those produced using a metallocene catalyst) such as polyolefin based resin: linear low density polyethylene, low density polyethylene, very-low density polyethylene, very-low density linear polyethylene, medium density polyethylene and high density polyethylene, and a polyethylene based resin such as an ethylene-α-olefin copolymer, polypropylene based resins such as polypropylene, ethylene-propylene (block and random) copolymers and a propylene-α-olefin (α-olefin having from 4 to 20 carbon atoms) copolymer, polybutene, polypentene and the like; grafted polyolefins prepared by graft-modifying these polyolefins with an unsaturated carboxylic acid or an ester thereof, cyclic polyolefin based resins; ionomer, ethylene-vinyl acetate copolymer, ethylene-acrylic aid copolymer, ethylene-acrylic acid ester copolymer, polyester based resin, polyamide based resin (including copolymerized polyamide), polyvinyl chloride, polyvinylidene chloride, acryl based resin, polystyrene, vinyl ester based resin, polyester elastomer, polyurethane elastomer, halogenated polyolefin such as chlorinated polyethylene and chlorinated polypropylene, aromatic or aliphatic polyketone and the like.

Of these, preferred is a polyolefin based resin and particularly preferred are polyethylene and polypropylene, from the viewpoint of mechanical strength and formability.

Particularly, in order to improve penetration resistance and draw breaking stretchability of the film, it is desirable to use at least one kinds consisting of an very-low density polyethylene, a linear low density polyethylene prepared using a metallocene catalyst and polyolefin-plastomer, together with a low density polyethylene.

In this connection, it is desirable to blend the above-mentioned hydrophobic thermoplastic resin with an anti-ultraviolet ray agent or a tackifier. As the anti-ultraviolet ray agent, for example, there may be mentioned an ultraviolet ray absorbent (illustratively, a benzotriazole based ultraviolet ray absorbent, a benzophenone based ultraviolet ray absorbent, a salicylate based ultraviolet ray absorbent, a cyano acrylate based ultraviolet ray absorbent, an oxanilide based ultraviolet ray absorbent and the like), a light stabilizer (illustratively, hindered amine based light stabilizer, a nickel based light stabilizer and a benzoate based light stabilizer), a coloring agent and the like, and an ultraviolet ray absorbent is desirable because a synergistic effect as a chain initiation inhibitor and a radical supplementing agent can be obtained when it is used with a light stabilizer in combination.

A blending amount of the anti-ultraviolet ray agent is generally from 1 to 10% by weight, preferably from 2 to 8% by weight, particularly preferably from 3 to 5% by weight based on the above-mentioned hydrophobic thermoplastic resin. When such a blending amount is too small, the hydrophobic thermoplastic resin is apt to be deteriorated by ultraviolet rays, but it is not always the case that the anti-ultraviolet ray effect is improved in proportion to the increased blending amount.

In addition, as the tackifier, for example, an aliphatic saturated hydrocarbon based resin such as polyisobutene, an alicyclic saturated hydrocarbon based resin and the like can be mentioned, and it is generally from 1 to 30% by weight, preferably from 2 to 22% by weight, particularly preferably from 5 to 20% by weight, based on the above-mentioned hydrophobic thermoplastic resin. When such a blending amount is appropriate, films are closely contacted with each other when silage is covered with the film of the invention so that it becomes easy to seal and the films are hardly separated. When it is too small, films are separated to generate gaps and a danger of causing flow of air into the silo becomes high, and when it is too large, blocking of films occurs and there is a tendency that a deficiency is apt to occur at the time of wrapping.

A melt flow rate (MFR) of the above-mentioned hydrophobic thermoplastic resin layer is generally from 0.1 to 100 g/10 minutes, preferably from 0.5 to 50 g/10 minutes, particularly preferably from 0.5 to 20 g/10 minutes, under conditions of 210°C and a load of 2160 g. When the value of MFR is too small, there is a tendency that torque becomes too high at the time of extrusion-forming and vertical streaks are generated on the obtained film, and on the other hand, when the value of MFR is too large, there is a tendency that the extrusion-formability becomes unstable and film thickness of the obtained film varies. In addition, it is desirable that its difference from the MFR of the EVOH resin composition is small.

Also, in addition to these resins, it may be a multilayer structure in which paper, metal foil, uniaxially or biaxially stretched plastic film or sheet, woven fabric, non-woven fabric, metal flocculent, wood face, aluminum or silica deposition is in combination therewith.

Of these, preferably used is a multilayer structure having a construction in which a hydrophobic thermoplastic resin layer having excellent water-barrier properties is used as the outer surface layer and a resin composition layer is used as the intermediate layer.

The production method of said multilayer structure is roughly divided into a method for forming it from the melted state of the resin composition (a melt forming method) and a method for forming it by dissolving the resin composition in a solvent (e.g., a solution coating method). Particularly, the melt forming method is desirable in view of the productivity.

Illustratively, for example, there may be mentioned a method in which a hydrophobic thermoplastic resin is melt-extruded on a formed product (e.g., a film or sheet) of the EVOH resin composition, a method in which a resin composition layer is melt-extruded on a substrate such as a hydrophobic thermoplastic resin and a method in which a resin composition layer and a hydrophobic thermoplastic resin layer are coextruded, and illustratively, T-die extrusion, tubular extrusion, blow forming, profile extrusion and the like are employed. Particularly, when the tubular extrusion method is employed, its blow up ratio is generally from 1 to 10, preferably from 2 to 8, in view of the mechanical strength of the silage film.

In addition, there may be employed a method in which a resin composition film and a substrate such as a hydrophobic thermoplastic resin film are dry-laminated using a conventionally known adhesive such as an organic titanium compound, an isocyanate compound, a polyethyleneimine based compound, a polyester based compound and a polyurethane based compound, a method in which they are heat-laminated without an adhesive, a method in which they are laminated via an adhesive resin layer, and the like.

As the adhesive resin which constitutes the adhesive resin layer, it is not particularly limited and various substances can be used, but in general, there may be mentioned a carboxyl group-containing modified olefin based polymer which is obtained by chemically binding an unsaturated carboxylic acid or anhydride thereof to an olefin based polymer (the aforementioned polyolefin based resin in a broad sense) through an addition reaction, a graft reaction or the like, and illustratively, there may be mentioned, as a suitable example, a mixture of one or two or more substances selected from a maleic anhydride graft modified polyethylene, a maleic anhydride graft modified polypropylene, a maleic anhydride graft modified ethylene-ethyl acrylate copolymer, a maleic anhydride graft modified ethylene-vinyl acetate copolymer and the like.

The layer constitution of the multilayer structure is generally from 3 to 20 layers, preferably from 3 to 15 layers, particularly preferably from 3 to 10 layers, when the resin composition layer is regarded as a (a1, a2, ···), and the hydrophobic thermoplastic resin layer other than the EVOH resin is regarded as b (b1, b2, ···). For example, illustratively, an optional combination such as b/a/b, a/b/a, a1/a2/b, a/b1/b2, b2/b1/a/b1/b2 or b2/b1/a/b1/a/b1/b2 is possible.

In addition, when a recycle layer containing a mixture of the resin composition and the hydrophobic thermoplastic resin other than EVOH, which is obtained by re-melt forming the edges, defective units and the like generated in the process of producing said multilayer structure, is regarded as R, it is also possible to make b/a/R, R/b/a, b/R/a/b, b/R/a/R/b, b/a/R/a/b, b/R/a/R/a/R/b and the like.

Further, the above-mentioned conventionally known adhesive resin may be used between the above-mentioned layers of the multilayer structure.

Among them, most desirable is a multilayer structure in which a resin composition layer is used as the intermediate layer, so that permeation of water into the resin composition layer can be prevented for preventing lowering of gas-barrier properties of the resin composition layer. For example, illustratively, there may be mentioned hydrophobic thermoplastic resin layer/resin composition layer/ hydrophobic thermoplastic resin layer, hydrophobic thermoplastic resin layer/adhesive resin layer/resin composition layer/adhesive resin layer/ hydrophobic thermoplastic resin layer, hydrophobic thermoplastic resin layer/hydrophobic thermoplastic resin layer/adhesive resin layer/resin composition layer/adhesive resin layer/hydrophobic thermoplastic resin layer/ hydrophobic thermoplastic resin layer, and the like.

Of the above-mentioned ones, a multilayer structure which uses the hydrophobic thermoplastic resin layer/hydrophobic thermoplastic resin layer/adhesive resin layer/resin composition layer/adhesive resin layer/hydrophobic thermoplastic resin layer/ hydrophobic thermoplastic resin layer as the constitution unit is most desirable.

Regarding a thickness of the multilayer structure of the invention, the total thickness is generally from 5 to 500 µm, preferably from 10 to 300 µm, more preferably from 20 to 200 µm, particularly preferably from 20 to 50 µm.

Also, a thickness of the hydrophobic thermoplastic resin layer in the multilayer structure is not particularly limited, but is generally from 0.5 to 200 µm, preferably from 1 to 100 µm, particularly preferably from 1 to 10 µm. A thickness of the resin composition layer is not particularly limited, but is generally from 0.1 to 100 µm, preferably from 0.5 to 50 µm, particularly preferably from 0.5 to 5 µm. A thickness of the adhesive resin layer is not particularly limited, but is generally from 0.5 to 50 µm, preferably from 1 to 30 µm, particularly preferably from 1 to 5 µm. In this connection, when there are two or more layers for each layer, it means that the thickness of each layer is the above-mentioned thickness.

In addition, regarding a thickness ratio of the hydrophobic thermoplastic resin layer/resin composition layer, it is desirable that the hydrophobic thermoplastic resin layer is thicker, for the purpose of inhibiting entering of water into the hydrophobic thermoplastic resin layer, and when there are two or more layers for each layer, it is generally more than 1 and 30 or less, preferably from 2 to 10, as the ratio of layers having the thickest thickness. A thickness ratio of the adhesive resin layer/resin composition layer is generally from 0.1 to 2, preferably from 0.2 to 1.

As described in the above, the multilayer structure of the invention is a multilayer structure prepared only by laminating other hydrophobic thermoplastic resin layer and substrate therewith (stretching is not carried out), but it may be subjected to stretching treatment as occasion demands.

In this connection, the stretching may be any conventionally known stretching method, and for example, uniaxial stretching, biaxial stretching and the like can be mentioned. In the case of biaxial stretching, each of a simultaneous biaxial orientation method and a sequential biaxial orientation method can be employed. As the stretching method, for example, a tenter type stretching, a double babble type stretching and the like can be mentioned. The stretching temperature is selected from an approximate range of generally from 50 to 200°C, preferably from 80 to 160°C, as a temperature of the multilayer structure (temperature near the multilayer structure). Since the silage film of the invention is stretched sometimes at a normal temperature at the time of the silage sealing, in the instant stretching step, it is desirable to use the stretching ratio at such a level that a room for later normal temperature stretching remains.

### <Preparation method of silage>

The method for preparing silage using the silage film of the invention is not particularly limited.

As the raw material of the silage, a commonly used raw material is optionally used, which is generally grass. For example, illustratively, there may be mentioned the gramineous plant such as orchardgrass, timothy, perennial ryegrass, Italian ryegrass, Kentucky bluegrass, tall meadow fescue, sudangrass and straw; the leguminosae plant such as white clover, red clover and alfalfa; corns; as well as weeds on a ridge between rice fields, native grass, waste vegetables and the like. These may be used alone or two or more thereof may be used in combination.

In addition, like the case of all-in-silage, it is possible to prepare silage by mixing the above-mentioned grass with side materials such as concentrate feed and unused or low utility feed resources, such as cereals, brans, soybeans, bean cakes and brewer's grain, in an mount of from 0.1 to 30% by weight.

It is desirable to use the silage film of the invention for grass silage, particularly to use it as a film for packing silage containing from 70 to 99.9% by weight of grass.

As the silage preparation method, a general silage preparation method is employed. For example, the raw material is dried to appropriate water content (in general, from 30 to 70% by weight) in response to the necessity, and this is stored under a sealed condition in response to a respective silo shape.

In this case, when residual oxygen inside the film is reduced by increasing the silage raw material density through shredding or trampling of the silage raw material, there is a tendency that good silage is obtained due to inhibition of the activity of aerobic bacteria and generation of mold.

As described in the above, the silage may be sealed in various type of silo, stored under an anaerobic condition to be fermented. Such a storing period is generally from 1 to 36 months, further from 2 to 24 months.

A shape of the silo using the silage film of the invention is not particularly limited, and for example, there may be mentioned various shapes such as a bunker silo, an underground type (or semi-underground type) silo, a bag silo, a tube silo, a stack silo and a wrap silo.

Particularly, when a wrap silo is prepared, grass is firstly reshaped to a desired volume (e.g., from 0.1 to 50 m³, preferably from 1 to 30 m³). For example, in the case of a cylindrical shape roll bale silo, its size is generally from 0.5 to 3 m, preferably from 1 to 2 m, in diameter, and generally from 0.5 to 3 m, preferably from 1 to 2 m, in height.

Thereafter, the silage film of the invention is wrapped around the reshaped grass using a common wrap rolling machine and the silage is sealed. Since it is desirable to reduce the air remaining in the silage as low as possible at the time of the wrapping of film, it is desirable to carry out close contact of the film with the silage by wrapping the film while stretching it by applying tension thereto.

Such a stretching ratio is generally from 1.1 to 5 times, preferably from 1.3 to 3 times, particularly preferably from 1.5 to 2 times.

In addition, wrapping frequency of the film is generally from two- to ten-fold, preferably from two- to eight-fold, particularly preferably from two- to fivefold. Since the silage film of the invention is excellent in gas-barrier properties, penetration resistance and draw stretchability, excellent effects can be obtained with further smaller frequency.

Since the silage film of the invention is excellent in gas-barrier properties, penetration resistance and draw stretchability, it is particularly useful for use in wrap silo which is largely influenced by the performance of the silage film.

The feed thus made into silage may be provided directly as feed or may be adjusted as a mixed feed by adding concentrate feed having high protein content such as cereals, brans and soybean.

### [Examples]

The following illustratively describes the invention with reference to examples, but the invention is not limited to the descriptions of the examples without overstepping its gist.

In this connection, the "part" as used in the examples means weight basis unless otherwise mentioned.

### Example 1

### [Production of resin composition pellet and film]

Using a saponified ethylene-vinyl acetate copolymer ("SoarnoL AT4403B" manufactured by The Nippon Synthetic Chemical Industry Co., Ltd., ethylene content of 44% by mol, degree of saponification of 99.7% by mol, MFR (210°C, 2160 g) of 3.5 g/10 min) as the EVOH resin (A), and a saponified ethylene-vinyl acetate copolymer ("Melthene H0051K" manufactured by Tosoh Corporation, ethylene content of 89% by mol, degree of saponification of 99% by mol, MFR (190°C, 2160 g) of 6.5 g/10 min, density of 970 kg/m³) as the saponified EVA (B), ratio of the above-mentioned EVOH resin (A) and saponified EVA (B) were set to (A)/(B) = 80/20 by weight ratio and used herein.

This resin composition was dry-blended, and melt-kneaded, followed by extruding into a strand shape under the following conditions. By cutting this strand using a pelletizer, a resin composition of cylindrical pellet shape was obtained. Extruder: diameter (D) 57 mm, twin screw extruder, L/D = 44
Screw shape: two kneading blocks
Screen pack: 90/90 mesh
Screw revolution: 90 rpm
Temperature setting: C1/C2/C3/C4/C5/C6/D = 150/170/200/200/200/200°C
Discharge quantity: 78 kg/hr

### [Preparation of silage film]

Using the thus obtained pellet of resin composition, a multilayer structure having the following structure was film-formed under the following conditions to obtain a silage film having 2.6 m in width and 27.5 µm in total thickness.

### [Layer constitution and thickness of each layer]

Four kinds, seven layers (outer layer 1/outer layer 2/adhesive resin layer/resin composition layer/adhesive resin layer/inner layer 1/inner layer 2)
Outer layer 1: polyethylene based resin composition {melt blend product of 70% by weight of α-olefin-ethylene copolymer (MFR (190°C, 2160 g) of 1.0 g/10 min, density of 0.90 g/cm³), 15% by weight of linear low density polyethylene (MFR (190°C, 2160 g) of 1.1 g/10 min, density of 0.92 g/cm³),, and 15% by weight of polyisobutylene} layer, 5 µm in thickness
Outer layer 2: identical to the outer layer 1, 5 µm in thickness
Adhesive resin layer: maleic anhydride-modified polyethylene ("MODIC-AP M603" manufactured by Mitsubishi Chemical Corporation), 2.5 µm in thickness
Resin composition layer: the resin composition obtained in the above, 2.5 µm in thickness
Inner layer 1: linear low density polyethylene produced using a metallocene catalyst (MFR (190°C, 2160 g) of 1.0 g/10 min, melting point of 118°C, density of 0.92 g/cm³), 5 µm in thickness
Inner layer 2: identical to the inner layer 1, 5 µm in thickness

### [Film forming conditions]

A multi layer blown film film-forming machine (7 kinds, 7 layers) was used. Extruder: Inner and outer layers; diameter (D) 70 mm, L/D = 30
Adhesive resin layer and hydrophobic thermoplastic resin layer; diameter (D) 60 mm, L/D = 30

Temperature setting and revolution:
Outer layer 1: C1/C2/C3/C4/A = 190/190/190/190/195 47 rpm
Outer layer 2: C1/C2/C3/C4/A = 190/190/195/215/225 65 rpm
Adhesive resin layer: C1/C2/C3/C4/A = 185/190/200/215/215 39 rpm
Resin composition layer: C1/C2/C3/C4/A = 190/195/205/210/210 10 rpm
Adhesive resin layer: C 1/C2/C3/C4/A = 185/190/200/215/215 40 rpm
Inner layer 1: C1/C2/C3/C4/A = 190/190/195/215/225 76 rpm
Inner layer 2: C1/C2/C3/C4/A = 190/190/195/215/225 48 rpm
Die: 350 mm, temperature setting 210°C
Film draw rate: 45 m/min

### [Preparation of silage]

Grass was mowed and dried outdoors until its water content became from 35 to 45% by weight. The resulting grass was reshaped using a roll baler into a roll bale shape (a cylindrical shape of 1.2 m in diameter and 1.2 m in height (1.4 m³)). The above-mentioned film was wrapped around the peripheral of this bale, fourfold at ambient temperature while stretching about 170%, thereby sealing the silage and obtaining roll bale wrap silage.

At the time of wrapping the silage film, break and tear of the film did not occur and perforation by sticking of the contents into the film did not occur too. In addition, adhesion of the film to the bale was also excellent.

### [Evaluation methods]

### (1) Generation amount of mold

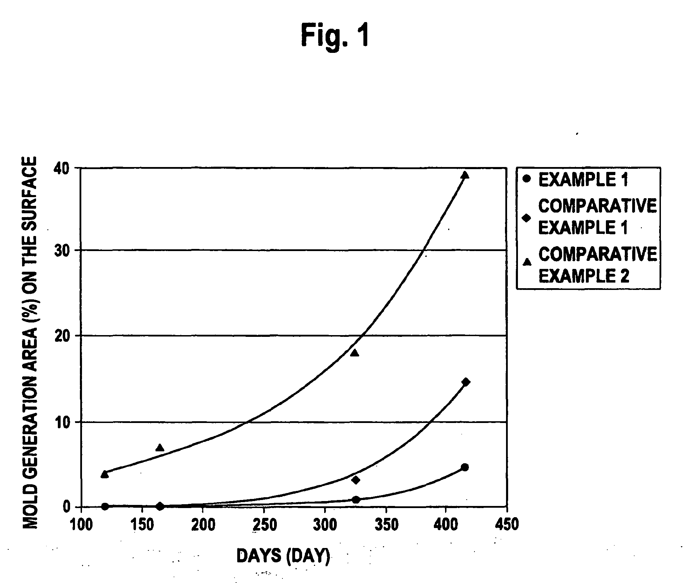

The roll bale wrap silage prepared using the silage film of the invention was left outdoors under direct sunlight, and generation area (%) of the mold adhered to the film surface was measured. The results are shown in Fig. 1.

### (2) Mechanical property

Using the obtained silage film, oxygen permeation test, draw test and penetration test were carried out under the following conditions. The results thereof are shown in Table 1.
(i) Oxygen permeation test
   Apparatus: OX-TRAN 2/20, manufactured by MOCON
   Environment: 20°C, 65% RH
(ii) Draw test
   Apparatus: Autograph AGS-H, manufactured by Shimadzu Corporation
   Sample: 15 mm rectangular shape (n = 5, prepared by cutting out the above-mentioned film to the MD/TD direction)
   Conditions: distance between chucks: 40 mm, draw rate: 100 mm/min
   Environment: 23°C, 50% RH
(iii) Penetration test
   Apparatus: Autograph AGS-H, manufactured by Shimadzu Corporation
   Sample: 10 cm × 10 cm
   Conditions: In accordance with ASTM F1306-90
   Environment: 23°C, 50% RH

### Comparative Example 1

The evaluations were carried out in the same manner as in Example 1 using polyamide based resins (nylon 6, 66) as the gas-barrier property layer and using a 2 kind 2 layer multilayer structure (polyamide based resin/polyethylene based resin composition = 5.5 µm/20 µm) comprising a polyethylene based resin composition {a melt blend product of 70% by weight of α-olefin-ethylene copolymer (MFR (190°C, 2160 g) of 1.1 g/10 min, density of 0.92 g/cm³), 15% by weight of linear low density polyethylene (MFR (190°C, 2160 g) of 1.1 g/10 min, density of 0.92 g/cm³, and 15% by weight of polyisobutylene} layer.

### Comparative Example 2

The evaluations were carried out in the same manner as in Example 1, except that a single layer film (50 µm in thickness) of a polyethylene based resin {a melt blend product of 70% by weight of α-olefin-ethylene copolymer (MFR (190°C, 2160 g) of 1.0 g/10 min, density of 0.90 g/cm³), 15% by weight of linear low density polyethylene (MFR (190°C, 2160 g) of 1.1 g/10 min, density of 0.92 g/cm³), 15% by weight of polyisobutylene} was used instead of the resin composition of Example 1 and wrapping of silage with the film was changed to six-fold.

The results of the Example and Comparative Examples are shown in Figure 1 and Table 1.

In this connection, the data of Figure 1 was obtained by consigning to Professor G. Borreani at the Faculty of Agriculture, University of Torino, Italy.

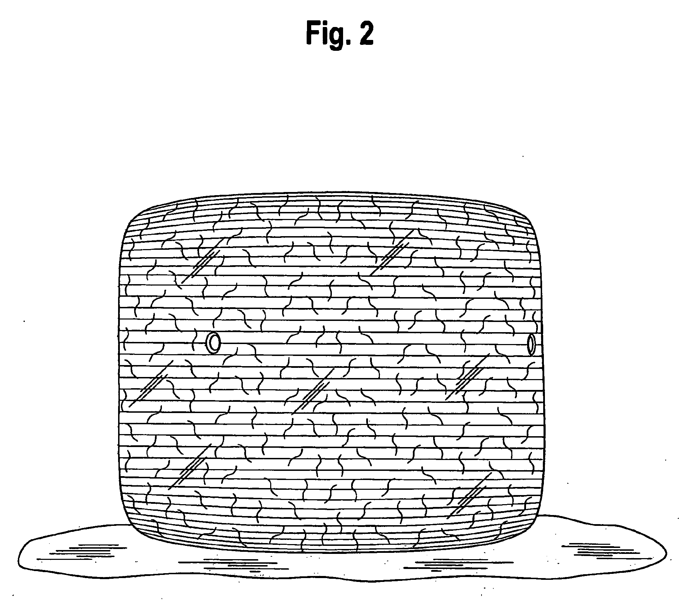

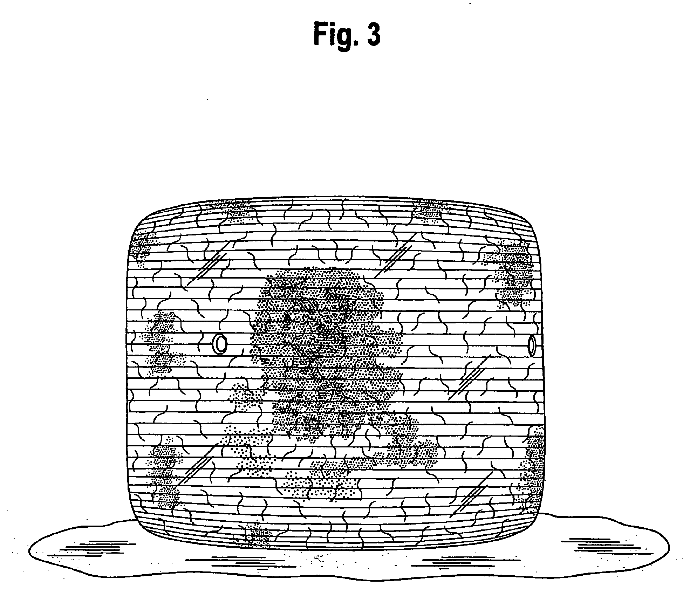

In addition, a photograph showing a condition of the roll bale wrap silage after 420 days in Example 1 is shown in Figure 2, and a photograph showing a condition of the roll bale wrap silage after 420 days in Comparative Example 2 is shown in Figure 3.

Based on the above-mentioned results, it was revealed that good silage can be obtained by the silage film of the invention because it inhibits generation of mold for a prolonged period of time.

In addition, holes were not made in the film by the grass and the like so that air did not flow in, the film was not broken by the tension applied to the film at the time of wrapping, and good results were obtained also on the penetration resistance and draw stretchability.

**[Table 1]**

| | Oxygen permeation test | Draw test | | Penetration test |
|---|---|---|---|---|
| | Oxygen permeability (per 1 µm thickness) (cc/m²·day·atm) | Elongation at breaking (MD direction) (%) | Elongation at breaking (TD direction) (%) | Distance (mm) where the probe penetrated until the film was broken |
| Example 1 | 80 | 345 | 680 | 16.7 |
| Comparative Example 1 | 1375 | 425 | 497 | 9.6 |
| Comparative Example 2 | - (not measurable due to detection limit or more) | 534 | 1015 | 20.8 |

In the above-mentioned oxygen permeability test, the resin other than the EVOH resin and polyamide based resin which are resins having high gas-barrier properties allowed more than the detection limit of oxygen to permeate, so that it is regarded as no influence upon the oxygen permeation test.

Based on the above results, the silage film of the invention was possessed of higher gas-barrier properties than those of the conventional polyamide based resins and polyethylene based resins and was possessed of good fracture elongation, and results of its penetration test were also good.

### Examples 3 and 4, Reference Examples 2 and 5 and Comparative Examples 3 and 4

### [Production of resin composition pellet and film]

Using a saponified ethylene-vinyl acetate copolymer ("SoamoL AT4403B" manufactured by The Nippon Synthetic Chemical Industry Co., Ltd., ethylene content of 44% by mol, degree of saponification of 99.7% by mol, MFR (190°C, 2160 g) of 3.5 g/10 min) as the EVOH resin (A), and a saponified ethylene-vinyl acetate copolymer ("Melthene H0051 K" manufactured by Tosoh Corporation, ethylene content of 89% by mol, degree of saponification of 99% by mol, MFR (190°C, 2160 g) of 6.5 g/10 min, density of 970 kg/m³) as the saponified EVA (B), the above-mentioned EVOH resin (A) and saponified EVA (B) were used with the blending ratios shown in Table 2.

Each of the resin compositions was dry-blended, and melt-kneaded, followed by extruding into a strand shape under the following conditions. By cutting this strand using a pelletizer, a resin composition of cylindrical pellet shape was obtained.
Extruder: diameter (D) 30 mm, twin screw extruder, L/D = 44
Screw shape: two kneading blocks
Screen pack: 90/90 mesh
Screw revolution: 160 rpm
Temperature setting: C1/C2/C3/C4/C5/C6/D = 150/170/200/200/200/200°C

### [Preparation of silage film]

Using the thus obtained pellet of resin composition, a multilayer structure having the following structure was film-formed under the following conditions to obtain a silage film of 400 mm in width and 29 µm in total thickness.

### [Layer constitution and thickness of each layer]

Three kinds, five layers (outer layer/adhesive resin layer/resin composition layer/adhesive resin layer/inner layer)
Outer layer: a polyethylene based resin (Novatec LL UF421, MFR (190°C, 2160 g): 0.9 g/10 min), density of 0.926 g/cm³), 10 µm in thickness
Adhesive resin layer: maleic anhydride-modified polyethylene ("MODIC-AP M533" manufactured by Mitsubishi Chemical Corporation), 3 µm in thickness
Resin composition layer: the obtained resin composition, 3 µm in thickness
Inner layer: identical to the outer layer, 5 µm in thickness

### [Film forming conditions]

A multi layer tubular film machine (5 kinds, 5 layers) was used.
Extruder: Inner and outer layers; diameter (D) 40 mm, L/D = 30
Adhesive resin layer and hydrophobic thermoplastic resin layer; diameter (D) 40 mm, L/D = 30

Temperature setting and revolution:
Outer layer: C1/C2/C3/C4/A = 180/190/200/210/210 28 rpm
Adhesive resin layer: C1/C2/C3/C4/A = 170/180/190/200/200 9 rpm
Resin composition layer: C1/C2/C3/C4/A = 180/190/200/210/210 10 rpm
Adhesive resin layer: C1/C2/C3/C4/A = 170/180/190/200/200 9 rpm
Inner layer: C1/C2/C3/C4/A = 180/190/200/210/210 25 rpm
Die: 150 mm, temperature setting 210°C
Film draw rate: 10 m/min

### [Evaluation method]

The above-mentioned (2) mechanical property tests were carried out on each case. The results are shown in Table 2.

**[Table 2]**

| | Resin composition | Draw test | | Penetration test | Oxygen permeability |
|---|---|---|---|---|---|
| weight | (EVOH resin (A) /saponified EVA (B) by weight ratio) | Elongation at breaking (MD direction) (%) | Elongation at breaking (TD direction) (%) | Distance (mm) where the probe penetrated until the film was broken | Oxygen permeability (per I µm thickness) (cc/m²•day•atm) |
| Ref. Example 2 | 93/7 | 535 | 583 | 8.6 | |
| Example 3 | 88/12 | 577 | 740 | 9.0 | |
| Example 4 | 80/20 | 576 | 718 | 8.9 | 39 |
| Ref. Example 5 | 73/27 | 813 | 749 | 9.2 | 45 |
| Comparative Example 3 | 67/33 | 792 | 767 | 9.6 | 48 |
| Comparative Example 4 | 100/0 (EVOH resin (A) alone) | 502 | 557 | 8.5 | 21 |
| Comparative Example 5 | Polyethylene | 1049 | 1114 | 11.0 | - (>200) |

Based on the above results, in comparison with the Comparative Example 4 which used EVOH resin (A) alone, Examples 2 to 5 of the invention showed superior results in the draw test and penetration test. This is because possession of a specified amount of the saponified EVA (B) in the invention enables to have flexibility which was not obtained by the EVOH resin alone.

In addition, when results of the draw test and penetration test and results of the oxygen permeation test are summed up, the resin composition shown in Example 4 was excellent in the balance of respective effects.

The silage film of the invention is useful because it renders possible acquisition of good silage, namely, since it is excellent in penetration resistance and draw stretchability while keeping excellent gas-barrier properties, mold are hardly generated in silage even when the silage is preserved for a prolonged period of time, holes are not made in the film by the contents (grass and the like) so that air does not flow in, and the film is not broken by the tension applied to the film at the time of wrapping.

## Claims

1. A silage film, which comprises at least one layer of a resin composition layer comprising a saponified ethylene-vinyl acetate based copolymer (A) having an ethylene content of from 20 to 60% by mol and a saponified ethylene-vinyl acetate based copolymer (B) having an ethylene content of 70 to 98% by mol, wherein a blending ratio (A)/(B) of the saponified ethylene-vinyl acetate based copolymer (A) to the saponified ethylene-vinyl acetate based copolymer (B) is from 91 /9 to 78/22 by weight ratio.

2. The silage film according to claim 1, wherein the total amount of the component (A) and component (B) in the resin composition is from 80 to 100% by weight.

3. The silage film according to claim 1, which comprises a hydrophobic thermoplastic resin layer on at least one side of the resin composition layer.

4. The silage film according to claim 3, wherein the hydrophobic thermoplastic resin is a polyolefin based resin.

5. The silage film according to any one of claims I to 4, wherein the resin composition layer is an intermediate layer.

6. The silage film according to any one of claims 1 to 5, wherein a layer constitution thereof is from 3 to 20 layers.

7. The silage film according to any one of claims 1 to 6, wherein a total thickness thereof is from 5 to 500 µm.

8. The silage film according to any one of claims 2 to 7, wherein a thickness ratio of the thickest hydrophobic thermoplastic resin layer to the thickest resin composition layer is more than 1 and 30 or less.

9. The silage film according to any one of claims 1 to 8, wherein a layer constitution thereof is hydrophobic thermoplastic resin layer/hydrophobic thermoplastic resin layer/adhesive resin layer/resin composition layer/adhesive resin layer/hydrophobic thermoplastic resin layer/hydrophobic thermoplastic resin layer.

10. The silage film according to claim 3, which comprises: the resin composition layer; an adhesive resin layer; and a hydrophobic thermoplastic resin layer, wherein
a layer constitution of the film is hydrophobic thermoplastic resin layer/hydrophobic thermoplastic resin layer/adhesive resin layer/resin composition layer/adhesive resin layer/hydrophobic thermoplastic resin layer/hydrophobic thermoplastic resin layer,
a thickness of the resin composition layer is from 0.5 to 50 µm,
a thickness of the adhesive resin layer is from 1 to 30 µm,
a thickness of the hydrophobic thermoplastic resin layer is from I to 100 µm,
a thickness ratio of the thickest hydrophobic thermoplastic resin layer to the thickest resin composition layer is more than 1 and 30 or less, and
a thickness ratio of the thickest adhesive resin layer to the thickest resin composition layer is from 0.1 to 2.

11. The silage film according to claim 10, wherein the hydrophobic thermoplastic resin is a polyolefin based resin.

12. The silage film according to claim 1 or 3, wherein a blending ratio of the saponified ethylene-vinyl acetate based copolymer (B), based on the saponified product of ethylene-vinyl acetate based copolymer (A) is from I to 30 % by weight.

## Patentansprüche

1. Silofolie, die zumindest eine Schicht aus einer Harzzusammensetzungsschicht aufweist, die ein verseiftes Copolymer (A) auf Ethylenvinylacetatbasis mit einem Ethylengehalt von 20 bis 60 Mol-% und ein verseiftes Copolymer (B) auf Ethylenvinylacetatbasis mit einem Ethylengehalt von 70 bis 98 Mol-% aufweist, wobei ein Mischungsverhältnis (A)/(B) des verseiften Copolymers (A) auf Ethylenvinylacetatbasis zu dem verseiften Copolymer (B) auf Ethylenvinylacetatbasis 91/9 bis 78/22 im Gewichtsverhältnis beträgt.

2. Silofolie nach Anspruch 1, wobei die Gesamtmenge der Komponente (A) und der Komponente (B) in der Harzzusammensetzung 80 bis 100 Gewichts-% beträgt.

3. Silofolie nach Anspruch 1, die eine hydrophobe thermoplastische Harzschicht auf zumindest einer Seite der Harzzusammensetzungsschicht aufweist.

4. Silofolie nach Anspruch 3, wobei das hydrophobe thermoplastische Harz ein Harz auf Polyolefinbasis ist.

5. Silofolie nach einem der Ansprüche 1 bis 4, wobei die Harzzusammensetzungsschicht eine Zwischenschicht ist.

6. Silofolie nach einem der Ansprüche 1 bis 5, wobei ein Schichtaufbau derselben 3 bis 20 Schichten beträgt.

7. Silofolie nach einem der Ansprüche 1 bis 6, wobei eine Gesamtdicke derselben 5 bis 500 µm beträgt.

8. Silofolie nach einem der Ansprüche 2 bis 7, wobei ein Dickenverhältnis der dicksten hydrophoben thermoplastischen Harzschicht zu der dicksten Harzzusammensetzungsschicht mehr als 1 und 30 oder weniger beträgt.

9. Silofolie nach einem der Ansprüche 1 bis 8, wobei ein Schichtaufbau derselben eine hydrophobe thermoplastische Schicht / hydrophobe thermoplastische Harzschicht / Haftharzschicht / Harzzusammensetzungsschicht / Haftharzschicht / hydrophobe thermoplastische Harzschicht / hydrophobe thermoplastische Harzschicht umfasst.

10. Silofolie nach Anspruch 3, die aufweist: die Harzzusammensetzungsschicht; eine Haftharzschicht; und eine hydrophobe thermoplastische Harzschicht, wobei
ein Schichtaufbau der Folie eine hydrophobe thermoplastische Schicht / hydrophobe thermoplastische Harzschicht / Haftharzschicht / Harzzusammensetzungsschicht / Haftharzschicht / hydrophobe thermoplastische Harzschicht / hydrophobe thermoplastische Harzschicht umfasst,
eine Dicke der Harzzusammensetzungsschicht 0,5 bis 50 µm beträgt,
eine Dicke der Haftharzschicht 1 bis 30 µm beträgt,
eine Dicke der hydrophoben thermoplastischen Harzschicht bis 100 µm beträgt,
ein Dickenverhältnis der dicksten hydrophoben thermoplastischen Harzschicht zu der dicksten Harzzusammensetzungsschicht mehr als 1 und 30 oder weniger beträgt, und
ein Dickenverhältnis der dicksten Haftharzschicht zu der dicksten Harzzusammensetzungsschicht 0,1 bis 2 beträgt.

11. Silofolie nach Anspruch 10, wobei das hydrophobe thermoplastische Harz ein Harz auf Polyolefinbasis ist.

12. Silofolie nach Anspruch 1 oder 3, wobei ein Mischungsverhältnis des verseiften Copolymers (B) auf Ethylenvinylacetatbasis basierend auf dem verseiften Produkt des verseiften Copolymers (A) auf Ethylenvinylacetatbasis 1 bis 30 Gewichts-% beträgt.

## Revendications

1. Film d'ensilage, qui comprend au moins une couche d'une couche de composition de résine comprenant un copolymère d'éthylène-acétate de vinyle saponifié (A) ayant une teneur en éthylène de 20 à 60% en moles, et un copolymère d'éthylène-acétate de vinyle saponifié (B) ayant une teneur en éthylène de 70% à 98% en moles, dans lequel un taux de mélange (A)/(B) du copolymère d'éthylène-acétate de vinyle saponifié (A) au copolymère d'éthylène-acétate de vinyle saponifié (B) est de 91/9 à 78/22 en poids.

2. Film d'ensilage selon la revendication 1, dans lequel la quantité totale du composant (A) et du composant (B) dans la composition de résine est de 80 à 100% en poids.

3. Film d'ensilage selon la revendication 1, qui comprend une couche de résine thermoplastique hydrophobe sur au moins une face de la couche de composition de résine

4. Film d'ensilage selon la revendication 3, dans lequel la résine thermoplastique hydrophobe est une résine à base de polyoléfine.

5. Film d'ensilage selon l'une quelconque des revendications 1 à 4, dans lequel la couche de composition de résine est une couche intermédiaire.

6. Film d'ensilage selon l'une quelconque des revendications 1 à 5, dans lequel sa constitution en couches comprend de 3 à 20 couches.

7. Film d'ensilage selon l'une quelconque des revendications 1 à 6, dans lequel son épaisseur totale est de 5 à 500 µm.

8. Film d'ensilage selon l'une quelconque des revendications 2 à 7, dans lequel un rapport d'épaisseur de la couche de résine thermoplastique hydrophobe la plus épaisse à la couche de composition de résine la plus épaisse est supérieur à 1 et 30 ou moins.

9. Film d'ensilage selon l'une quelconque des revendications 1 à 8, dans lequel sa constitution en couches comprend : couche de résine thermoplastique hydrophobe/couche de résine thermoplastique hydrophobe/couche de résine adhésive/couche de composition de résine/couche de résine adhésive/couche de résine thermoplastique hydrophobe/couche de résine thermoplastique hydrophobe.

10. Film d'ensilage selon la revendication 3, qui comprend la couche de composition de résine, une couche de résine adhésive, et une couche de résine thermoplastique hydrophobe, dans lequel
une constitution en couches du film comprend : couche de résine thermoplastique hydrophobe/couche de résine thermoplastique hydrophobe/couche de résine adhésive/couche de composition de résine/couche de résine adhésive/couche de résine thermoplastique hydrophobe/couche de résine thermoplastique hydrophobe
une épaisseur de la couche de composition de résine est de 0,5 à 50 µm,
une épaisseur de la couche de résine adhésive est de 1 à 30 µm,
une épaisseur de la couche de résine thermoplastique hydrophobe est de 1 à 100 µm,
un rapport d'épaisseur de la couche de résine thermoplastique hydrophobe la plus épaisse à la couche de composition de résine la plus épaisse est supérieur à 1 et 30 ou moins, et
un rapport d'épaisseur de la couche de résine adhésive la plus épaisse à la couche de composition de résine la plus épaisse est de 0,1 à 2.

11. Film d'ensilage selon la revendication 10, dans lequel la résine thermoplastique hydrophobe est une résine à base de polyoléfine.

12. Film d'ensilage selon la revendication 1 ou 3, dans lequel un taux de mélange du copolymère d'éthylèneacétate de vinyle saponifié (B), sur base du copolymère d'éthylène-acétate de vinyle saponifié (A), est de 1 à 30% en poids.
